# EUROPEAN PATENT APPLICATION

(11) **EP 2 947 648 A1**
(43) Date of publication of application: **25.11.2015**
(21) Application number: 14169389.5
(22) Date of filing: 22.05.2014
(51) Int. Cl.: G09G 3/36, B60K 37/06

(54) **Display device**

(71) Applicant: Johnson Controls GmbH, 51399 Burscheid (DE)
(72) Inventor: Burceacov, Alexandr, 57439 Attendorn (DE); Bieletzki-Welz, Viktor, 42799 Leichlingen (DE); Schilling, Christian, 50968 Köln (DE)
(74) Representative: Finger, Catrin

(57) **Abstract**

The invention relates to a display device (1), in particular vehicle display device (1), comprising:
- a display unit (3) arranged on a visible side of a housing (2) and having a rear side (3.1) and a visible front side (3.2),
- at least one light source (L) arranged facing the rear side (3.1) of the display unit (3) and adapted to illuminate at least one section of the display unit (3),
- an optical sensor (6) adapted to receive light,
- a printed circuit board (5) adapted to support the at least one light source (L) and the optical sensor (6),
- a light guide (7) coupled to a light input point (9) and having a light output point (7.1),
- wherein the light input point (9) is arranged facing a visible area of the display device (1) and the light output point (7.1) is arranged facing the optical sensor (6).

## Description

### Technical Field

The present invention relates to a display device, in particular vehicle display device.

### Background of the Invention

Display devices, in particular for motor vehicles, are well known in the related art. Such display devices are gaining an ever-increasing presence in cockpits of motor vehicles, for example, cockpits of cars. They are used in infotainment and navigation systems, instrument clusters, and climate controls.

DE 101 00 214 A1 discloses a display device comprising a housing and a liquid crystal display. The liquid crystal display comprises a light sensor adapted to generate an electrical signal depending on a light intensity in an area of a separately operable section of the liquid crystal display. An illumination unit controls the light intensity depending on the generated electrical signal.

### Summary of the Invention

It is an object of the present invention to provide an improved display device.

According to the invention, the object is achieved by a display device according to claim 1.

Preferred embodiments of the invention are given in the dependent claims.

According to the present invention, there is provided a display device, in particular vehicle display device, that comprises a display unit arranged on a visible side of a housing and having a visible front side and a rear side, at least one light source arranged facing the rear side of the display unit and adapted to illuminate at least one section of the display unit, an optical sensor adapted to receive light, a printed circuit board adapted to support the at least one light source and the optical sensor, a light guide coupled to a light input point and having a light output point, wherein the light input point is arranged facing a visible area of the display device, and wherein the light output point is arranged facing the optical sensor.

The provided display device means an improved display device according to the related art, because the light is conducted nearly directly from the visible area to the optical sensor. Thus, the optical sensor receives a reliable intensity of light that is located on the visible area of the display device. In context of the invention, the visible area is an area that is visible by a user. The display device unit is adapted to show infotainment and navigation systems and/or instrument clusters with dials and/or climate controls. The light input point means a light ingress surface, wherein the light output point means a light-emitting surface. Furthermore, the display device provides that the light guide can be integrated into an existing component of the display device that is allowed to collect and/or transmit light from the visible area of the display device.

In a first exemplary embodiment, the light guide is coupled with a lens, wherein the lens comprises the light input point. The lens is arranged in the front of the display unit for protecting it. In this case, the lens collects the light from the visible area of the display device additionally and transmits the collected light to the light guide.

To conduct the light to the optical sensor, the light guide is attached to the edge of the lens, whereby a surface of the lens is arranged parallel to a surface of the printed circuit board.

Preferably, the light guide and the lens are designed as one piece. Hence, a manufacturing and mounting process will be more cost- and time effective.

In a second exemplary embodiment, the light guide is coupled to a functional element that comprises the light input point. The functional element is arranged on the visible side of the display device and may be designed as an operable button. The functional element is made from a translucent material at least section wise so that the light from the visible area of the display device can be transmitted to the light guide. Preferably, the light guide and the functional element are manufactured as one piece.

In the first exemplary embodiment as well as in the second exemplary embodiment, the light guide may be made from a translucent material at least section wise. In particular, coupling areas of the light guide may be made from a translucent material. One coupling area faces the light input point, in particular the lens or the functional element and the other coupling area faces the optical sensor. Thus, the light is allowed to enter and to leave the light guide.

To ensure a less loss of light during conduction to the optical sensor, the light guide is preferably covered at least section wise by an opaque material except the coupling areas.

The optical sensor receives the light comprising a specific intensity. Depending on the intensity, the optical sensor generates an electrical signal. The optical sensor may be designed as a photo tube operating according to the photoelectric effect.

The printed circuit board comprises a control unit that is adapted to control the light source depending on the electrical signal generated by the optical sensor. With this, the illumination of the visible area is adjustable to ambient light conditions.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitative of the present invention, and wherein:
- Figure 1: is a schematic cross-sectional view of a display device according to a first exemplary embodiment and
- Figure 2: is a schematic cross-sectional view of a display device according to a second exemplary embodiment.

Corresponding parts are marked with the same reference symbols in all figures.

### Detailed Description of the Preferred Embodiments

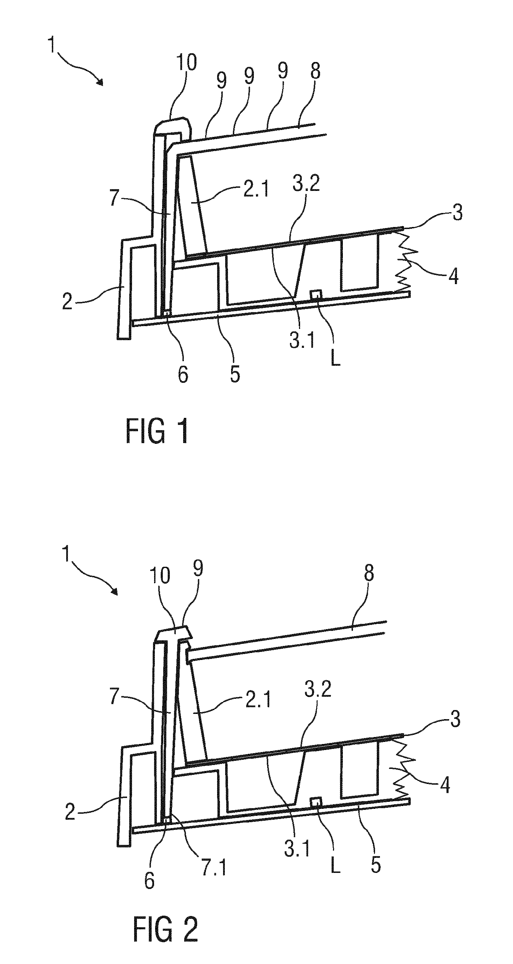

**Figure 1** shows a cross-sectional view of a display device 1 according to a first exemplary embodiment of the invention.

The display device 1 is adapted to arrange within a vehicle dashboard and to facilitate reading of vehicle operating information by a vehicle occupant.

In the present embodiment, the display device 1 comprises a housing 2 and a display unit 3. The housing 2 comprises a visible side having a recess, in which the display unit 3 is integrated.

The display unit 3 comprises a rear side 3.1 and a front side 3.2 that is visible by a vehicle occupant. The display unit 3 may comprise a liquid crystal display, a circular dial member with painted graphics, or any other type of display known in the art. In case of that the display unit 3 comprises a circular dial member with painted graphics; the dial member is made at least section wise from a translucent material. The display unit 3 may be designed as a speedometer, a tachometer, an engine condition indicator, such as telltales, or any other type of gauge or dial known in the art.

The display unit 3 is coupled to a light housing 4 for reflecting light towards the rear side 3.1 of the display unit 3. Therefore, the light housing 4 comprises a number of channels that are adapted for more evenly distribute light from at least one light source L to a desired area of the display unit 3.

The display unit 3 is further coupled to a printed circuit board 5 that supports the light housing 4 and the at least one light source L for illuminating the rear side of the display unit 3, whereby the light source L is mounted on the printed circuit board 5. Preferably, the light source L is a light emitting diode.

In addition to, the light source L may be any other type of light emitting devices.

The printed circuit board 5 further supports an optical sensor 6 that is mounted on an edge region of the printed circuit board 5. The optical sensor 6 may be designed as a photo tube using the photoelectric effect or as any other optical sensor that is suitable for converting an optical signal into an electrical signal.

The optical sensor 6 receives light from a visible area of a visible side of the display unit 3. The visible area of the visible side of the display unit 3 is an area visible by a vehicle occupant.

Depending on an intensity of the received light, the optical sensor 6 converts the light into an electrical signal. A not shown control unit that is supported on the printed circuit board 5 receives the electrical signal and, depending on the electrical signal, controls the light source L. Controlling the light source L means controlling an intensity of the emitted light and thus an illumination intensity of the display unit 3 by the light source L. For example, when the optical sensor 6 receives a less intensity of light, the control unit controls the light source L in a manner to emit a high intensity of light or the other way around to emit a less intensity of light to reduce a dazzling effect.

The light that is received by the optical sensor 6 is transmitted by a light guide 7 from the visible area of the visible side of the display unit 3. The light guide 7 may be made of optical transparent plastics or from glass. Preferably, the light guide 7 comprises an opaque cover, thus a loss of light during transmission towards the optical sensor 6 is minimized.

The light guide 7 further comprises a light output point 7.1 that faces the optical sensor 6 and that is arranged opposite the optical sensor 6 in a minimal distance. The light output point 7.1 is defined as a light emitting area of the light guide 7 and is not covered by the opaque material.

For light entry into the light guide 7, the light guide 7 is coupled to a lens 8. The lens 8 is arranged on the visible side of the display device 1 in front of the display unit 3. The lens 8 may be connected to the housing 2 by a latching connection such that the display unit 3 is fixed between the visible side of the housing 2 and the lens 8, whereby the light guide 7 is attached to the lens 8 in an edge region of the display unit 3. To support and protect the light guide 7, the housing 2 comprises a housing element 2.1 that is arranged between the display unit 3 and the lens 8, whereby the light guide 7 is arranged between the housing 2 and the housing element 2.1 according to a length expansion.

The lens 8 protects the display unit 3 against environmental influences. For viewing the display unit 3 throughout the lens 8, the lens 8 is made from an optical transparent material. Therefore, the lens 8 is suitable for collecting light from the visible area of the visible side of the display unit 3 so that the lens 8 comprises a light input point 9 that defines a light entry area with a number of light input spots. The light collected by the lens 8 is received by the light guide 7. Preferably, the lens 8 and the light guide 7 are manufactured as one piece made from an optical transparent plastic, whereby the light guide 7 comprises the opaque cover as it is described before.

**Figure 2** shows a cross-sectional view of the display device 1 according to a second embodiment of the invention.

The display device 1 according to the second embodiment is designed nearly in the same way as in the first embodiment with exception that the light guide 7 is not coupled with the lens 8 but with a functional element 10.

The functional element 10 arranged on the visible side of the housing 2 and may be designed as a button for operating the display unit 3 or as a design element of the housing 2. In this case, the functional element 10 is made from a translucent or in particular from an optical transparent material at least section wise. The part of the functional element 10 that is made from the optical transparent material defines the light input point 9. The light is transmitted to the optical sensor 6 via the light guide 7 in the same way as it is described in figure 1. Preferably, the light guide 7 and the functional element 10 are manufactured as one piece, whereby the light guide 7 may comprise the opaque cover.

### List of references

- 1: display device
- 2: housing
- 2.1: housing element
- 3: display unit
- 3.1: rear side
- 3.2: front side
- 4: light housing
- 5: printed circuit board
- 6: optical sensor
- 7: light guide
- 7.1: light output point
- 8: lens
- 9: light input point
- 10: functional element

- L: light source

## Claims

1. Display device (1), in particular vehicle display device (1), comprising:
- a display unit (3) arranged on a visible side of a housing (2) and having a rear side (3.1) and a visible front side (3.2),
- at least one light source (L) arranged facing the rear side (3.1) of the display unit (3) and adapted to illuminate at least one section of the display unit (3),
- an optical sensor (6) adapted to receive light,
- a printed circuit board (5) adapted to support the at least one light source (L) and the optical sensor (6),
- a light guide (7) coupled to a light input point (9) and having a light output point (7.1),
- wherein the light input point (9) is arranged facing a visible area of the display device (1) and the light output point (7.1) is arranged facing the optical sensor (6).

2. Display device (1) according to claim 1,
**characterized in that** the light guide (7) is coupled with a lens (8), wherein the lens (8) comprises the light input point (9).

3. Display device(1) according to claim 2,
**characterized in that** the lens (8) is arranged in front of the visible side of the display unit (3), wherein the light guide (7) is attached to the edge of the lens (8).

4. Display device (1) according to claim 2 or 3,
**characterized in that** the light guide (7) and the lens (8) are designed as one piece.

5. Display device (1) according to claim 1,
**characterized in that** the light guide (7) is coupled to a functional element (10) that comprises the light input point (9).

6. Display device (1) according to claim 5,
**characterized in that** the functional element (10) is arranged on the visible side of the display unit (3) and is made from a translucent material at least section wise.

7. Display device (1) according to one of the previous claims,
**characterized in that** the light guide (7) is made from a translucent material.

8. Display device (1) according to one of the previous claims,
**characterized in that** the light guide (7) is covered by an opaque material at least section wise.

9. Display device (1) according to one of the previous claims,
**characterized in that** the optical sensor (6) generates an electrical signal depending on an intensity of the received light.

10. Display device (1) according to claim 9,
**characterized in that** the printed circuit board (5) comprises a control unit that is adapted to control the light source (L) depending on the electrical signal generated by the optical sensor (6).
